# EUROPEAN PATENT SPECIFICATION

(11) **EP 2 154 195 B1**
(45) Date of publication and mention of the grant of the patent: **05.01.2011**
(21) Application number: 08162359.7
(22) Date of filing: 14.08.2008
(51) Int. Cl.: C08L 23/10

(54) **Composition for retortable packaging applications**
Zusammensetzung für autoklavierbare Verpackungsanwendungen
Composition pour applications de conditionnement souple

(43) Date of publication of application: 17.02.2010
(73) Proprietor: Borealis AG, 1220 Vienna (AT)
(72) Inventor: Grein, Christelle, 4020 Linz (AT); Gloger, Dietrich, 4020 Linz (AT); Pham, Tung, 4040 Linz (AT); Schedenig, Tonja, 4470 Ens (AT)
(74) Representative: Lux, Berthold

(56) References cited:
- WO-A-99/15584
- WO-A-2005/123827
- JP-A- 4 323 238

## Description

The present invention relates to a heterophasic polymer composition which is useful for the preparation of sterilizable containers such as retort pouches or medical packaging.

There is an increasing trend in the food packaging industry to use plastic containers, notably pouches containing sterilized or pre-cooked foods. Retort pouches offer many advantages over rigid metal packages such as faster cooking/sterilizing time, less shelf storage space, easier disposal, improved food taste, etc. Typical pouches have a multilayer structure with polyolefins such as polyethylene or polypropylene, adhesives, barrier and external layers. It is desired that the polyolefin material imparts stiffness as well as high impact strength to the final packaging material. In addition, the polymers should comply with legal requirements about safety standards, e.g. FDA regulations in terms of the amount of hexane solubles.

The same trend, i.e. increased use of polyolefinic materials, is seen in the medical packaging industry as well. Again, the polymer should impart sufficient stiffness as well as high impact strength to the final packaging material.

It is known that impact strength of polypropylene can be improved by dispersing a rubber phase within the polymer matrix, thereby obtaining a heterophasic polypropylene composition. Such a material is also called "impact-modified polypropylene".

In WO 2005/123827, a heterophasic polypropylene was subjected to a reactive modification step with bifunctionally unsaturated compounds such as dienes or divinyl compounds so as to improve balance of impact strength, stiffness, and surface stability.

EP 1860147 A1 discloses a heterophasic polypropylene composition having an improved stress whitening resistance without loss of a good balance of impact strength and stiffness. The heterophasic polymer comprises a propylene homo- or copolymer matrix, an ethylene/propylene rubber having a propylene content of 55 to 90 wt%, wherein the the heterophasic polymer has been modified in a coupling reaction with a peroxide.

EP 1167404 A1 discloses a polymer composition comprising a semicrystalline propylene polymer and an elastomeric ethylene copolymer which has been modified by reacting with bifunctional monomers in the presence of a radical-generating compound. The obtained polymer composition has an improved balance of toughness, strength and heat resistance.

US 2002/0082328 discloses a polypropylene composition comprising a highly crystalline polypropylene, an ethylene/alpha-olefin elastomer, an inorganic filler, an organic peroxide, and a crosslinking assistant. The polymer composition shows beneficial scratch resistance, rigidity, heat resistance and impact strength.

EP 1354901 A1 discloses a heterophasic polymer composition comprising a propylene homo- or copolymer matrix and an ethylene/C3-C10 alpha-olefin rubber phase dispersed therein, wherein the heterophasic polymer composition has an MFR(230°C, 2.16 kg) of more than 100 g/10 min. The polymer composition has good processability and an improved balance of mechanical properties.

For some food packaging applications such as retort pouches or some medical packaging applications, a sterilization treatment is needed. The most common sterilization procedures are the use of heat (steam), radiation (beta radiation, electrons, or gamma radiation) or chemicals (usually ethylene oxide). Steam sterilisation is usually carried out in a temperature range of about 120 to 130°C. Of course, treatment of a polymer under the sterilization conditions outlined above can have an impact on its final properties.

For packaging applications, it is very important that the seal strength performance of the polymeric material, in particular in the area of a welding joint where two polymer films are fixed together, is still on a high level after having been subjected to a sterilization step at high temperature. If sterilization has a detrimental impact on seam strength of a welding joint fixing two polymer films within the packaging material, the welding joint could easily open under stress. This failure mode is also called "peel effect" and should be suppressed as much as possible.

However, it has now turned out that seal strength performance of a heterophasic polypropylene is significantly impaired during a sterilization step, in particular at high amounts of rubber dispersed in the matrix. In other words, in known impact-modified polypropylenes, improvement of impact strength by increasing the amount of rubber is achieved on the expense of seal strength (or peeling resistance). The weakness of the known impact-modified polypropylene materials with respect to their seal strength performance after a sterilization step at higher rubber loadings limits their use to small containers or pouches, typically less than 500 g, i.e. to applications where requirements on impact strength are not the highest. Such a limitation is related to the increased promotion of peel with increasing amounts of the dispersed rubber phase.

Thus, it is an object of the present invention to provide a polypropylene composition which still has high seal strength after being subjected to a sterilization treatment, while simultaneously maintaining impact strength on a high level. Furthermore, the final composition should still have sufficient stiffness and comply with legal requirements, e.g. FDA regulations in terms of hexane solubles.

According to the present invention, the object is solved by providing a heterophasic polymer composition, comprising
- a matrix comprising a propylene homo- and/or copolymer,
- an elastomeric ethylene/C3-C12 alpha-olefin phase dispersed in the matrix, the heterophasic polymer composition further
- having an MFR(230°C, 2.16 kg) of less than 8 g/10 min,
- comprising monomer units derived from a compound having at least two double bonds; and
- having a xylene cold soluble fraction (XCS) which has an amount of C3-C12 alpha-olefin derived monomer units of at least 60 wt%.

The polypropylene constituting the matrix can be a propylene homopolymer, a propylene copolymer, or a blend thereof.

In case it is a propylene copolymer, it preferably has comonomers derived from olefins selected from the group consisting of ethylene, C₄ to C₂₀ olefins, more preferably ethylene, C₄ to C₈ olefins, or any mixture thereof. Preferably, the amount of comonomers is less than 8.0 wt%, more preferably less than 5.0 wt%, and even more preferably less than 3.0 wt%, based on the weight of the propylene copolymer. In a preferred embodiment, it is a propylene homopolymer which constitutes the matrix.

In the present invention, the term "matrix" is to be interpreted in its commonly accepted meaning, i.e. it refers to a continuous phase (in the present invention a continuous polymer phase) in which isolated or discrete particles such as rubber particles may be dispersed. The propylene homo- or copolymer is present in such an amount so as to form a continuous phase which can act as a matrix.

The matrix phase can be made of the propylene homo- and/or copolymer only but can also comprise additional polymers, in particular polymers which can be blended homogeneously with the propylene homo- or copolymer and together form a continuous phase which can act as a matrix. In a preferred embodiment, at least 80 wt% of the matrix, more preferably at least 90 wt%, even more preferably at least 95 wt% of the matrix is made of the propylene homo- and/or copolymer. The matrix may even consist of the propylene homo- and/or copolymer.

Preferably, the propylene homo- and/or copolymer constituting the matrix has a melt flow rate MFR(230°C, 2.16 kg) within the range of 0.3 to 5 g/10 min, more preferably within the range of 0.4 to 4 g/10 min, and even more preferably within the range of 0.5 to 3 g/10 min.

As indicated above, the propylene homo- and/or copolymer matrix may optionally comprise further polymer(s) which can be blended homogeneously with the propylene homo- and/or copolymer. Preferably, the matrix, either consisting of the propylene homo and/or copolymer or optionally comprising one or more additional polymers, has a melt flow rate MFR(230°C, 2.16 kg) within the range of 0.3 to 5 g/10 min, more preferably within the range of 0.4 to 4 g/10 min, and even more preferably within the range of 0.5 to 3 g/10 min.

Preferably, the propylene homo- or copolymer constituting the matrix is made with a Ziegler-Natta catalyst or a metallocene catalyst.

In a preferred embodiment, the polypropylene constituting the matrix has a rather broad molecular weight distribution (MWD), more preferably the polypropylene is multimodal, even more preferred bimodal. "Multimodal" or "multimodal distribution" describes a frequency distribution that has several relative maxima. In particular, the expression "modality of a polymer" refers to the form of its molecular weight distribution (MWD) curve, i.e. the appearance of the graph of the polymer weight fraction as a function of its molecular weight. If the polymer is produced in a sequential step process, i.e. by utilizing reactors coupled in serial configuration, and using different conditions in each reactor, the different polymer fractions produced in the different reactors each have their own molecular weight distribution which may considerably differ from one another. The molecular weight distribution curve of the resulting final polymer can be seen as super-imposing of molecular weight distribution curves of the individual polymer fractions which will, accordingly, show distinct maxima, or at least be distinctively broadened compared with the curves for individual fractions.

A polymer showing such molecular weight distribution curve is called bimodal or multimodal, respectively.

The polypropylene constituting the matrix can be multimodal, e.g. bimodal. If the polypropylene constituting the matrix is multimodal (e.g. bimodal), it preferably has a molecular weight distribution (MWD) of 5 to 60, more preferably in the range of 8 to 25.

However, it is also possible to use a monomodal polypropylene. If used, it preferably has an MWD of 3 to 8, more preferably 4 to 7.

Moreover the polypropylene constituting the matrix preferably has a weight average molecular weight (M_{w}) of 450,000 to 1,400,000 g/mol, more preferably in the range of 500,000 to 1,200,000 g/mole.

The propylene homo- or copolymer constituting the matrix may be produced by a single- or multistage process polymerisation of propylene or propylene with alpha-olefin and/or ethylene such as bulk polymerisation, gas phase polymerisation, solution polymerisation or combinations thereof using conventional catalysts. A homo- or copolymer can be made either in loop reactors or in a combination of loop and gas phase reactors. Those processes are well known to one skilled in the art.

A suitable catalyst for the polymerisation of the propylene polymer is any stereospecific catalyst for propylene polymerisation which is capable of polymerising and copolymerising propylene and comonomers at a temperature of 40 to 110 °C and at a pressure from 10 to 100 bar. Ziegler-Natta catalysts (especially a high yield Ziegler-Natta system containing Ti, Cl, Mg and Al) as well as metallocene catalysts are suitable catalysts.

In addition to the polypropylene matrix defined above, the heterophasic polymer composition of the present invention comprises an elastomeric ethylene/C3-C 12 alpha-olefin phase dispersed in the matrix.

As used in the present invention, the term "elastomeric" corresponds to the commonly accepted meaning and refers to a rubber-like polymeric material of more or less amorphous nature.

The elastomeric copolymer is dispersed within the propylene polymer matrix, i.e. it does not form a continuous phase but is rather present as separated areas distributed throughout the polypropylene constituting the matrix.

Preferably, the elastomeric ethylene/C3-C12 alpha-olefin is an ethylene/propylene rubber, which may additionally comprise C4-C12 alpha-olefin monomer units.

In a preferred embodiment, the elastomeric ethylene/C3-C12 alpha-olefin phase has an amount of C3-C12 alpha-olefin-derived monomer units of at least 60 wt%, more preferably at least 65 wt%. Preferably, the amount of C3-C12 alpha-olefin-derived monomer units is within the range of 70 wt% to 78 wt%.

More preferably, the ethylene/C3-C12 alpha-olefin rubber phase is an ethylene/propylene rubber, optionally further comprising C4-C12 alpha-olefin-derived monomer units, wherein the amount of C3-C12 alpha-olefin-derived monomer units, preferably the amount of propylene-derived monomer units is at least 60 wt%, more preferably at least 65 wt% or even at least 70 wt%, even more preferably more than 70 wt%, e.g. at least 72 wt% or at least 74 wt%. As preferred ranges, the following can be mentioned: From 65 wt% to 80 wt%, from 70 wt% to 78 wt%, or from 72 wt% to 78 wt%.

Preferably, the elastomeric ethylene/C3-C12 alpha-olefin phase, preferably having an amount of at least 60 wt% of C3-C12 alpha-olefin-derived monomer units, is present in an amount of at least 5 wt%, more preferably at least 10 wt%, even more preferably at least 15 wt% or even at least 20 wt%, based on the weight of the heterophasic polymer composition. Preferably, said rubber phase is present in an amount within the range of 5 wt% to 35 wt%, more preferably 10 wt% to 30 wt%, even more preferably 15 wt% to 30 wt%, even further preferably 20 wt% to 25 wt%, based on the weight of the heterophasic polymer composition.

In principle, the heterophasic polymer composition may additionally comprise one or more elastomeric ethylene/C3-C12 alpha-olefin phases (i.e. in total two or more ethylene/C3 to C12 alpha-olefin rubber phases) wherein at least one of these rubber phases may have less than 60 wt% of C3 to C12 alpha-olefin derived monomer units.

However, if so, the total amount of C3 to C12 alpha-olefin derived monomer units in the dispersed rubber phases should still be high enough so as to result in a xylene cold soluble fraction of the heterophasic polymer composition which has an amount of C3-C12 alpha-olefin-derived monomer units of at least 60 wt%. The meaning of the parameter "xylene cold soluble fraction" will be discussed below in further detail. If these additional ethylene/C3-C12 alpha-olefin rubber phases having less than 60 wt% of C3 to C12 alpha-olefin derived monomer units are present, their total amount is preferably less than 15 wt%, more preferably less than 10 wt%, even more preferably less than 5 wt%, based on the weight of the heterophasic polymer composition.

However, within the present invention it is preferred that the heterophasic polymer composition does not comprise any elastomeric ethylene/C3-C12 alpha-olefin phase having less than 60 wt% of C3-C12 alpha-olefin-derived monomer units.

As already indicated above, the heterophasic polymer composition has an MFR(230°C, 2.16 kg) of less than 8 g/10 min.

Preferably, the heterophasic polymer composition has an MFR(230°C, 2.16 kg) of less than 6 g/10 min, more preferably less than 5 g/10 min, even more preferably an MFR(230°C, 2.16 kg) within the range of 0.4 g/10 min to 4 g/10 min, even further preferably within the range of 0.5 g/10 min to 3 g/10 min.

As indicated above, the xylene cold soluble fraction of the heterophasic polymer composition has an amount of C3-C12 alpha-olefin-derived monomer units, more preferably an amount of propylene-derived monomer units of at least 60 wt%, more preferably at least 65 wt%, even more preferably at least 70 wt%, and even further preferably at least 75 wt%. Preferably, the amount of C3-C12 alpha-olefin-derived monomer units, more preferably the amount of propylene-derived monomer units is within the range of 65 wt% to 80 wt%, more preferably 70 wt% to 78 wt%, even more preferably 72 wt% to 78 wt%.

The xylene cold soluble fraction comprises the amorphous parts of the polypropylene matrix and the total amount of rubber dispersed within the matrix. However, as the xylene cold soluble fraction originating from the matrix is quite low, the xylene cold soluble fraction of the heterophasic polymer composition indicates, as a first approximation, the total amount of rubber. Furthermore, as a first approximation, the content of the C3-C12 alpha-olefin derived monomer units such as propylene-derived monomer units in the xylene cold soluble fraction corresponds to the C3-C 12 alpha-olefin content of the rubber phase. Xylene cold soluble fraction (XCS) is easy to measure and frequently used as a parameter indicating the amount of elastomeric components within heterophasic, impact-modified compositions.

Preferably, the heterophasic polymer composition has a xylene cold soluble fraction of more than 5 wt%, e.g. at least 10 wt% or at least 20 wt%. In a preferred embodiment, the xylene cold soluble fraction of the heterophasic polymer composition is within the range of 5 wt% to 35 wt%, more preferably 10 wt% to 30 wt%, even more preferably 15 to 30 wt%, even further preferably 20 wt% to 25 wt%.

Preferably, the xylene cold soluble fraction has an intrinsic viscosity of at least 2 dl/g, more preferably at least 2.5 dl/g. In a preferred embodiment, the xylene cold soluble fraction has an intrinsic viscosity within the range of 2 dl/g to 5 dl/g, more preferably 2.5 dl/g to 4,5 dl/g.

The elastomeric ethylene/C3-C12 alpha-olefin may be produced by known polymerisation processes such as solution, suspension and gas-phase polymerisation using conventional catalysts. Ziegler-Natta catalysts as well as metallocene catalysts are suitable catalysts.

A widely used process is the solution polymerisation. Ethylene together with propylene and/or a C4-C12 alpha-olefin such as 1-butene are polymerised in the presence of a catalyst system in an excess of hydrocarbon solvent. Stabilisers and oils, if used, are added directly after polymerisation. The solvent and unreacted monomers are then flashed off with hot water or steam, or with mechanical devolatilisation. The polymer, which is in crumb form, is dried with dewatering in screens, mechanical presses or drying ovens. The crumb is formed into wrapped bales or extruded into pellets.

The suspension polymerisation process is a modification of bulk polymerisation. The monomers and catalyst system are injected into the reactor filled with propylene. The polymerisation takes place immediately, forming crumbs of polymer that are not soluble in the propylene. By flashing off the propylene and comonomers, the polymerisation process is completed.

The gas-phase polymerisation technology uses one or more vertical fluidised beds. Monomers and nitrogen in gas form along with catalyst are fed to the reactor and solid product is removed periodically. Heat of reaction is removed through the use of the circulating gas that also serves to fluidise the polymer bed. Solvents are not used, thereby eliminating the need for solvent stripping, washing and drying.

Further information about the production of elastomeric copolymers is also provided in e.g. US 3,300,459, US 5,919,877, EP 0 060 090 Al and in a company publication by EniChem "DUTRAL, Ethylene-Propylene Elastomers", pages 1-4 (1991).

Alternatively, elastomeric copolymers, which are commercially available and which fulfil the indicated requirements, can be used.

If the elastomeric polymer is prepared separately from the polypropylene constituting the matrix, it can be subsequently blended with the matrix polymer by any conventional blending means, e.g. melt blending in an extruder.

Alternatively, the elastomeric ethylene/C3-C12 phase can be prepared as a reactor blend together with the propylene homo- and/or copolymer constituting the matrix, e.g. starting with the production of the matrix polymer in a loop reactor and optionally a gas phase reactor, followed by transferring the product into a gas phase reactor, where the elastomeric polymer is polymerised.

Preferably, the heterophasic polymer composition is prepared by reactor blending in a multistep process comprising at least one loop reactor and at least one gas phase reactor.

Preferably, a dispersion of the elastomeric phase within the matrix polymer is produced by performing a further polymerization stage in the presence of particles of matrix polymer, e.g. as a second polymerization stage of a multistage polymerization. Preferably the combination of the matrix and elastomeric copolymer is produced in a multiple stage polymerization using two or more polymerization reactors, more preferably using bulk and gas phase reactors (especially fluidized bed gas phase reactors), especially preferably using a loop reactor followed by two gas phase reactors or by a loop and a gas phase reactor. In such a procedure, the catalyst system used may be varied between stages but is preferably the same for all stages. Especially preferably, a prepolymerized heterogeneous catalyst is used.

While the catalyst may be a metallocene, it is preferred to use Ziegler-Natta catalysts, e.g. an inorganic halide (e.g. MgCl₂) supported titanium catalyst, together with an aluminium alkyl (e.g. triethylaluminium) cocatalyst. Silanes, e.g. dicyclopentanedimethoxysilane (DCPDMS) or cyclohexylmethyldimethoxysilane (CHMDMS), may be used as external donors. Such catalyst systems are described in EP 0 491 566 A1.

As indicated above, the heterophasic polymer composition comprises monomer units derived from a compound having at least two double bonds.

Preferably, the compound having at least two double bonds is a compound having at least two non-aromatic double bonds, preferably two non-aromatic carbon-carbon double bonds.

In a preferred embodiment, the compound having at least two double bonds is selected from divinyl compounds, allyl compounds, dienes, aromatic and/or aliphatic bis(maleimide) and bis(citraconimide) compounds, or any mixture of these.

Preferably, the compound having at least two double bonds is selected from those which can be polymerised in the presence of a radical-generating compound such as a peroxide.

The compound having at least two double bonds may be a divinyl compound, such as divinylaniline, m-divinylbenzene, p-divinylbenzene, divinylpentane and divinylpropane; an allyl compound, such as allyl acrylate, allyl methacrylate, allyl methyl maleate and allyl vinyl ether; a diene, such as 1,3-butadiene, chloroprene, cyclohexadiene, cyclopentadiene, 2,3-dimethylbutadiene, heptadiene, hexadiene, isoprene and 1,4-pentadiene; an aromatic and/or aliphatic bis(maleimide) or bis(citraconimide), or any mixture of these.

Within the present invention, it is also possible that the compound having at least two double bonds is a low molecular weight polymer having a number average molecular weight Mn of 10000 g/mol or less, which may be synthesised from one ore more unsaturated monomers.

Examples of such low molecular weight polymers are polybutadienes, especially where the different microstructures in the polymer chain, i. e. 1,4-cis, 1,4-trans and 1,2-(vinyl) are predominantly in the 1,2-(vinyl) configuration, copolymers of butadiene and styrene having 1,2- (vinyl) in the polymer chain.

As will be discussed below in further detail, the monomer units derived from the compound having at least two double bonds are preferably introduced after having prepared the matrix and the dispersed elastomeric phase. In other words, these monomer units preferably originate from a post treatment of the matrix and the dispersed rubber phase with a compound having at least two double bonds.

Without wishing to be bound by any theory, it is assumed that the compound having at least two double bonds acts as coupling agent between the matrix polymer and the dispersed rubber phase. It is believed that those compounds are bound to a polymer molecule of the matrix via their first double bond and to a polymer molecule of the dispersed phase via their second double bond, thereby effecting the coupling action and thus promoting dispersion of the elastomeric copolymer within the matrix phase.

Preferably, the compound having at least two double bonds is selected from 1,3-butadiene, isoprene, dimethyl butadiene, divinylbenzene, or any mixture thereof.

Preferred low molecular weight polymer is polybutadiene, in particular a polybutadiene having more than 50 wt% of the butadiene in the 1,2-(vinyl) configuration.

Preferably, the amount of monomer units derived from the compound having at least two double bonds is within the range of 0.01 wt% to 10 wt%, more preferably 0.05 wt% to 5 wt%, even more preferable 0.1 wt% to 3 wt%, based on the weight of the heterophasic polymer composition.

According to a further aspect, the present invention provides a film, comprising the heterophasic polymer composition as defined above.

The films may be prepared by any process known to the skilled person. Preferably, the films are produced by a cast film process or a blown film process. A roll stack process may also be used.

According to another aspect, the present invention provides a container or a packaging, comprising the heterophasic polymer composition as defined above and/or the film as defined above.

In a preferred embodiment, the container or packaging is a pouch, preferably a stand-up pouch, e.g. for food applications. The container or packaging may also be used for medical applications.

Preferably, the pouch (e.g. a stand-up pouch) with content has a weight of more than 500 g.

In a preferred embodiment, the container or packaging has been subjected to a heat sterilization, preferably in the temperature range of 115-130°C, preferably steam sterilization.

In principle, the seal strength can be measured by tearing the welding seam of two PP films, which are joined by welding, with defined speed until the seam breaks. One or more of the following properties can be measured to obtain data for the assessment of seal strength:
(1) The seam strength, expressed in MPa. The seam strength is the highest stress that is achieved in the stress-elongation curve that is the result of the tensile test.
(2) The elongation at break (ebreak), expressed in %. The elongation at break is the length of the sample at the moment of breakage relative to the original length of the sample.
(3) The work at break (Wbreak): Wbreak is the result of the integration of the stress-elongation curve in the interval between 0 and the elongation at break.
(4) The number of samples that showed a peel effect instead of film breakage.

According to a further aspect, the present invention provides a process for the preparation of the heterophasic polymer composition as defined above, comprising the following steps:
(i) providing an unmodified heterophasic polymer composition which comprises
   - a matrix comprising a propylene homo- and/or copolymer,
   - an elastomeric ethylene/C3-C12 alpha-olefin phase dispersed in the matrix,
(ii) subjecting the unmodified heterophasic polymer composition of step (i) to a reactive modification step with a compound having at least two double bonds.

With the term "unmodified", it is meant that the heterophasic polymer composition has not yet been subjected to a reactive modification step, i.e. it is reactively unmodified.

In a preferred embodiment, the unmodified heterophasic polymer composition has an MFR(230°C, 2.16 kg) of 1.5 g/10 min or less, more preferably 1.0 g/10 min or less. Preferably, it has an MFR(230°C, 2.16 kg) within the range of 0.3 to 1.5 g/10 min, more preferably 0.4 to 1.0 g/10 min. By selecting the preferred MFR ranges indicated above, it is possible to improve the phase morphology of the heterophasic polymer composition. During the reactive modification step, some degradation of polymer chains may occur which, in turn, may result in an increase of melt flow rate MFR. However, process conditions of the reactive modification step are to be chosen so as to result in a reactively modified heterophasic polymer composition having an MFR(230°C, 2.16 kg) of less than 8 g/10 min.

With respect to the preparation and properties of the propylene homo- and/or copolymer constituting the matrix, reference can be made to the statements provided above.

With respect to the preparation of the elastomeric copolymer, reference can be made to the statements provided above.

After having provided the unmodified heterophasic polymer composition of step (i), a reactive modification step (ii) with a compound having at least two double bonds is carried out.

With respect to the compound having at least two double bonds which can be used for the reactive modification step, reference can be made to the statements made above when discussing the heterophasic polymer which has already been subjected to a modification step (i.e. already comprising monomer units derived from said compound having at least two double bonds).

Preferably, the compound having at least two double bonds is added to the unmodified heterophasic polymer composition by sorption from the vapour phase. However, mixing of the compound having at least two double bonds with the unmodified heterophasic polymer composition can be accomplished by any other known mixing techniques as well.

Preferably, the reactive modification step (ii) is carried out in the presence of radical-forming agents such as peroxides.

After mixing of the compound having at least two double bonds and the unmodified heterophasic polymer composition, optionally in the presence of a peroxide, the resulting mixture is subjected to a heat treatment, preferably in the temperature range of 180 °C to 250 °C.

Preferably, heating and melting the mixture of heterophasic polymer composition, polyunsaturated compound, and optionally peroxide, takes place in an atmosphere of the volatile polyunsaturated compound and optionally an inert gas, e.g. nitrogen, preferably in continuous kneaders or extruders, with preference in twin-screw extruders.

It is also possible to directly modify the heterophasic polymer in the melt by injecting the compound having at least two double bonds, optionally together with a radical-forming compound into the melt, e.g. into one of the heating zones of an extruder. Preferably, the reactive modification step may then comprise:
- melting of the unmodified heterophasic polymer composition, preferably in an extruder,
- adding the compound having at least two double bonds, optionally in combination with a peroxide, to the polymer melt,
- heating the melt to 220 - 250°C to remove unreacted monomers and decomposition products.

Preferably, the compound having at least two double bonds is added to the unmodified heterophasic polymer composition in an amount of 0.01 wt% to 10 wt%, more preferably 0.05 wt% to 5 wt%, even more preferable 0.1 wt% to 3 wt%, based on the weight of the overall mixture.

Further details about reactive modification of a heterophasic polymer composition with polyunsaturated compounds having at least two double bonds are disclosed e.g. in EP 1391482 A1 or EP 1167404 A1, the disclosure of these documents herewith being incorporated.

According to a further aspect, the present invention provides a heterophasic polymer composition, comprising
- a matrix comprising a propylene homo- and/or copolymer,
- an elastomeric ethylene/C3-C12 alpha-olefin phase dispersed in the matrix, the heterophasic polymer composition further
- having an MFR(230°C, 2.16 kg) of 1.5 g/10 min or less,
- comprising a compound having at least two double bonds; and
- having a xylene cold soluble fraction (XCS) which has an amount of C3-C12 alpha-olefin derived monomer units of at least 60 wt%.

As already discussed above, this composition may then be subjected to an appropriate treatment step, e.g. heat treatment, so as to initiate the coupling reaction of the polyunsaturated additive compound with the matrix polymer and the elastomeric polymer.

Preferably, the compound having at least two double bonds is present in an amount of 0.01 to 10 wt%, more preferably 0.05 to 5 wt%, even more preferably 0.1 to 3 wt%, based on the weight of the heterophasic polymer composition.

With respect to the compound having at least two double bonds which can be used for the reactive modification step, reference can be made to the statements made above when discussing the heterophasic polymer which has already been subjected to a modification step (i.e. already comprising monomer units derived from said compound having at least two double bonds).

With respect to the preparation and properties of the propylene homo- and/or copolymer constituting the matrix, reference can be made to the statements provided above.

With respect to the preparation of the elastomeric copolymer, reference can be made to the statements provided above.

According to a further aspect, the present invention provides the use of the reactively modified heterophasic polymer composition as defined above (i.e. the polymer composition which has already been subjected to reactive modification and comprises monomer units derived from the unsaturated compound having at least two double bonds) for the preparation of sterilizable or sterilized containers such as retort pouches or medical packaging.

According to a further aspect, the present invention provides the use of the reactively modified heterophasic polymer composition as defined above for improving seal strength in sterilizable or sterilized containers or packaging.

The present invention will now be illustrated in further detail by the examples provided below.

### Examples

### Measuring methods

### 1. Mw, Mn, MWD

Weight average molecular weight (Mw), number average molecular weight (Mn) and thus molecular weight distribution (MWD = Mw/Mn) was determinated by size exclusion chromatography (SEC) based on standard test methods ISO 16014-2:2003 and ISO 16014-4:2003.

The molecular weight averages and molecular weight distribution were measured on a Waters Alliance GPCV2000 SEC instrument with on-line viscometer at 140 degrees Celsius using 1,2,4-trichlorobenzene (TCB) stabilized with 2,6-di-tert-butyl-4-methylphenol (BHT) as an eluent. A set of two mixed beds and one 107 Å TSK-Gel columns from TosoHaas was used and the system was calibrated with NMWD polystyrene standards (from Polymer laboratories).

### 2. Melt Flow Rate (MFR)

The melt flow rates were measured with a load of 2.16 kg (MFR₂) at 230 °C for polypropylene and at 190 °C for polyethylene. The melt flow rate is that quantity of polymer in grams which the test apparatus standardised to ISO 1133 extrudes within 10 minutes at a temperature of 230 °C or 190 °C respectively, under a load of 2.16 kg.

### 3. Comonomer content

Comonomer content (wt%) can be determined in a known manner based on Fourier transform infrared spectroscopy (FTIR) determination calibrated with ¹³C-NMR.

### 4. Xylene cold soluble fraction (XCS, wt%)

The xylene cold soluble fraction (XCS) was determined at 23°C according to ISO 6427.

### 5. Intrinsic viscosity

The intrinsic viscosity (IV) was determined according to ISO 1628-1 at 135°C with decaline as solvent.

### 6. Dynatest, measured at 23°C

The Dynatest measures the toughness and extensibility of the material. The normalized failure energy W_{F}/d [J/mm] can be regarded as the total energy per mm thickness that a film can absorb before it breaks. The higher this value, the tougher the material is. The normalized failure energy W_{F}/d [J/mm] is measured according to ISO 7765-2.

### 7. Seam strength measurements

The seam strength is measured by tearing the seam with defined speed until it breaks. The measurement procedure is as follows:

Two identical PP films are welded together by applying a defined temperature and a defined pressure for a defined time. In the present case this welding was done at two different temperatures (180°C and 220°C) with a force of 300 N for 0,5 seconds. The strength of said welding joint is then measured by a Tensile Test following ISO 527: at a temperature of 23°C, the welding joint is fixed with clamps. The clamps start to move away from each other and by doing this apply stress to the film / welding joint. The movement of the clamps is going on until one of the following events:
(a) the film breaks next to the welding joint (desired failure mode in this case) or
(b) the welding joint opens (called "peel effect", this failure mode is not desired for the materials described in the present invention)

During this measurement the following parameters are continuously measured:
(1) The force that the film resists as a function of the actual elongation of the film. This is recorded continuously, at any time of the measurement one gets the actual elongation and the stress the film opposed this elongation.
   The parameter "εbreak" (=elongation at break) represents the length of the film related to the original length at the moment the film or welding joint breaks. It is given in % with the original length of the specimen before the measurement being 100%.
   The parameter "Wbreak" (= work at break) represents the total energy that the film /welding joint has consumed until the moment the film / welding joint breaks.
(2) Every measurement is done on 10 welding joints. After the measurements the broken specimens are evaluated for the failure mode (a) or (b). In the examples values are also given for "peel": this means how many out of 10 specimens showed the undesired failure mode (b): This value is desired to be as low as possible, ideally 0.

### 8. Melting temperature

Melting temperature Tm was measured with Mettler TA820 differential scanning calorimetry (DSC) on 5 to 10 mg, typically 8±0.5 mg samples. Melting curves were obtained during 10°C/min heating scans between 30°C and 225°C. Melting temperature was taken as the peak.

### 9. Amount of n-hexane solubles.

The amount of n-hexane solubles was measured according to the method FDA CFR 21 § 177: 1520. Procedure: 1 g sample of a polymer film of 100 µm thickness (produced on a PM30 cast film extruder using a chill-roll temperature of 40°C) was extracted at 50 °C in 400 ml n-hexane for 2 hours and then filtered on a filter paper No. 41. The filtrate was then evaporated and the total residue weighed as a measure of the n-hexane extractable fraction.

### II. Preparation of the test samples

### Examples CE1 and CE2

In the following examples, two heterophasic polymer compositions CE1 and CE2 were prepared which had not been subjected to any post treatment, i.e. neither by visbreaking nor by reactive modification with a polyunsaturated compound. These samples CE1 and CE2 differ in the amount of propylene-derived monomer units in the rubber phase, expressed by the amount of propylene-derived monomer units in the xylene cold soluble fraction (C3(XCS)) of the heterophasic polymer composition.

The heterophasic polypropylene compositions CE1 and CE2 were produced in a multistage polymerization process consisting of one loop reactor and one gas phase reactor using a conventional Ziegler-Natta catalyst system as known in the art. In the loop reactor, a propylene homopolymer was produced which was subsequently transferred to the gas phase reactor where the elastomeric ethylene/propylene phase was produced.

The properties of the final compositions are shown in Table 1a.

### Examples CE3 and CE4

Samples CE1 and CE2 were subjected to a modification treatment by visbreaking. Visbreaking of polypropylene by treatment with peroxides and/or irradiation is a well-known post-modification treatment of polypropylene for further fine-tuning polymer properties. The visbreaking was effected by feeding the heterophasic polymer into a twin screw extruder Prism TSE24 40D with a temperature profile 80/200/210/220/220/230/230/220/225/220 °C and a screw speed of 300 rpm. After heating and melting of the polymer, the visbreaking peroxide 2,5-dimethyl-2,5di(tert-butylperoxy)hexane is injected directly into the extruder, achieving a concentration of 0.05 to 0.4 wt.-% of the visbreaking peroxide.

Again, samples CE3 and CE4 differ in the amount of propylene-derived monomer units in the rubber phase, expressed by the amount of propylene-derived monomer units in the xylene cold soluble fraction (C3(XCS)).

The properties of the final compositions are shown in Table 1b.

### Examples CE5 and E1

Samples CE1 and CE2 were subjected to a reactive modification step by using a low molecular weight polybutadiene acting as the polyunsaturated compound, thereby obtaining samples CE5 and E1.

The modification was effected by feeding the heterophasic polymer into a twin screw extruder Prism TSE24 40D with a temperature profile 80/200/210/220/220/230/230/220/225/220 °C and a screw speed of 300 rpm. After heating and melting of the polymer, the thermally decomposing free radical-forming agent tert-butylperoxy isopropyl carbonate is injected directly into the extruder, achieving a concentration of 0.05 to 0.4 wt.-% of the thermally decomposing free radical-forming agent. Through a second injection port, a low molecular weight polybutadiene (1,2-polybutadiene with 65 wt% of the butadiene units in the 1,2-vinyl configuration and a molecular weight Mn of 2100 g/mol) acting as the polyunsaturated compound is injected into the same zone of the extruder as the thermally decomposing free radical-forming agent has been added. The polymer melt / liquid /gas mixture is passed through the extruder, then to intensive devolatilisation, discharged and pelletised.

The properties of the final compositions are shown in Table 1c.

From each of the polymer compositions according to CE1-CE5 and E1, two cast films of 100 µm thickness were prepared on a film extruder (PM 30 Extruder) with a melt temperature of 240 - 280°C, a melt pressure of 40 - 80 bar, an extruder screw rotational speed of 50 rpm and a chill roll temperature of 15°C, which were joined by welding as described above under the headline "Seam strength measurements". Subsequently, elongation at break ebreak and seam work consumption at break Wbreak (see explanations provided above under "Seam strength measurements") were measured before and after sterilisation. Furthermore, the type of failure mode (film breakage next to welding joint or opening of welding joint, i.e. "peeling effect") was noted. With the films as obtained in this paragraph also the Dynatest measurements are conducted. The results are provided below.

**Table 1a: Unmodified heterophasic polymer compositions**

| | | | **Unmodified** | |
|---|---|---|---|---|
| | | | **CE1** | **CE2** |
| **Compound** | | | | |
| | **Peroxide** | [wt%] | no | no |
| | **Polyunsaturated** | | | |
| | **additive** | [wt%] | no | no |
| | **MFR** | [g/10min] | 0,7 | 0,7 |
| | **XCS** | [wt%] | 22,9 | 22,1 |
| | **IV(XCS)** | [dl/g] | 3,72 | 3,21 |
| | **C3(XCS)** | [wt%] | 47 | 77,2 |
| | **C2-total** | [wt%] | 23,9 | 7,2 |
| | **Hexane-solubles** | [wt%] | 1,88 | 1,19 |
| **Dynatest 23°C** | **W_{F}/d** | [J/mm] | 19,3 | 41,9 |
| **Seam strength before** | | | | |
| **sterilisation** | **ebreak** | [%] | 380 | 426 |
| **180°C** | **Wbreak** | [J] | 7,31 | 9,74 |
| | **Peel** | [out of 10] | 0 | 1 |
| **Seam strength after** | | | | |
| **sterilisation** | **ebreak** | [%] | 14 | 146 |
| **180°C** | **Wbreak** | [J] | 0,21 | 4,87 |
| | **Peel** | [out of 10] | 10 | 10 |
| **Seam strength before** | | | | |
| **sterilisation** | **ebreak** | [%] | na | na |
| **220°C** | **Wbreak** | [J] | na | na |
| | **Peel** | [out of 10] | na | na |
| **Seam strength after** | | | | |
| **sterilisation** | **ebreak** | [%] | na | na |
| **220°C** | **Wbreak** | [J] | na | na |
| | **Peel** | [out of 10] | na | na |

**Table 1b: Heterophasic polymers modified by visbreaking**

| | | | **VISBROKEN** | |
|---|---|---|---|---|
| | | | **CE3** | **CE4** |
| **Compound** | | | | |
| | **Peroxide added** | [wt%] | 0.15 | 0.09 |
| | **Polyunsaturated additive** | [wt%] | no | no |
| | **MFR** | [g/10min] | 2,2 | 2,2 |
| | **XCS** | [wit%] | 19,8 | 21,8 |
| | **IV(XCS)** | [dl/g] | 3,43 | 3,12 |
| | **C3(XCS)** | [wt%] | 45,2 | 76,9 |
| | **C2-total** | [wit%] | 22,9 | 7,4 |
| | **Hexane-solubles** | [wt%] | 3,56 | 2,28 |
| **Dynatest 23°C** | **W_{F}/d** | [J/mm] | na | na |
| **Seam strength before** | | | | |
| **sterilisation** | **ebreak** | [%] | 407 | 425 |
| **180°C** | **Wbreak** | [J] | 7,37 | 8,21 |
| | **Peel** | [out of 10] | 0 | 10 |
| **Seam strength after** | | | | |
| **sterilisation** | **ebreak** | [%] | 16 | 33 |
| **180°C** | **Wbreak** | [J] | 0,34 | 0,81 |
| **Seam strength before** | **Peel** | [out of 10] | 0 | 10 |
| **sterilisation** | **ebreak** | [%] | 394 | 44 |
| **220°C** | **Wbreak** | [J] | 7,23 | 1 |
| **Seam strength after** | **Peel** | [out of 10] | 0 | 10 |
| **sterilisation** | **ebreak** | [%] | 11 | 22 |
| **220°C** | **Wbreak** | [J] | 0,22 | 0,4 |
| | **Peel** | [out of 10] | 10 | 10 |

**Table 1c: Heterophasic polymers subjected to reactive modification**

| | | | **REACTIVE MODIFIED** | |
|---|---|---|---|---|
| | | | **CE5** | **E1** |
| **Compound** | | | | |
| | **Peroxide added** | [wt%] | 0,3 | 0,3 |
| | **Polyunsaturated additive** | [wt%] | 0,1 | 0,1 |
| | **MFR** | [g/10min] | 2 | 2,1 |
| | **XCS** | [wt%] | 16,8 | 20,5 |
| | **IV(XCS)** | [dl/g] | 3,12 | 2,91 |
| | **C3(XCS)** | [wt%] | 47,1 | 77,8 |
| | **C2-total** | [wt%] | 22,5 | 7,1 |
| | **Hexane-solubles** | [wt%] | 2,81 | 1,71 |
| **Dynatest 23°C** | **W_{F}/d** | [J/mm] | 8,2 | 30 |
| **Seam strength before** | | | | |
| **sterilisation** | **ebreak** | [%] | 255 | 458 |
| **180°C** | **Wbreak** | [J] | 4,8 | 9,6 |
| | **Peel** | [out of 10] | 0 | 0 |
| **Seam strength after** | | | | |
| **sterilisation** | **ebreak** | [%] | 30 | 175 |
| **180°C** | **Wbreak** | [J] | 0,69 | 5,45 |
| | **Peel** | [out of 10] | 0 | 2 |
| **Seam strength before** | | | | |
| **sterilisation** | **ebreak** | [%] | 254 | 469 |
| **220°C** | **Wbreak** | [J] | 4,97 | 9,95 |
| | **Peel** | [out of 10] | 0 | 0 |
| **Seam strength after** | | | | |
| **sterilisation** | **ebreak** | [%] | 26 | 190 |
| **220°C** | **Wbreak** | [J] | 0,6 | 5,91 |
| | **Peel** | [out of 10] | 0 | 0 |

From the data provided in the Tables, the following conclusions can be drawn:

For the heterophasic polymer compositions which have not been modified (neither by visbreaking nor by reactive modification with polyunsaturated compounds), there is a dramatic decrease in seam strength after sterilisation and all sterilised samples show the undesired peel effect, irrespective of the propylene content in the rubber phase.

After performing a modification treatment by visbreaking, it is only the sample having a lower amount of propylene in the rubber phase (sample CE3) which shows some improvement with respect to the peel effect. However, at high welding temperature (220°C), both samples show a pronounced peel effect after sterilisation.

Reactive modification with polyunsaturated compounds results in a suppression of the peel effect after sterilisation, irrespective of the amount of propylene-derived monomer units in the rubber phase. However, it is only the sample with a propylene-rich rubber phase (i.e. propylene content of xylene cold soluble fraction of more than 60 wt%) and an overall MFR of less than 8 g/10 min which also has surprisingly high values for elongation at break (ebreak) and work at break (Wbreak) after sterilisation, thereby indicating high seam strength after sterilisation.

## Claims

1. A heterophasic polymer composition, comprising
- a matrix comprising a propylene homo- and/or copolymer,
- an elastomeric ethylene/C3-C12 alpha-olefin phase dispersed in the matrix,
the heterophasic polymer composition further
- having an MFR(230°C, 2.16 kg) of less than 8 g/10 min,
- comprising monomer units derived from a compound having at least two double bonds, and
- having a xylene cold soluble fraction which has an amount of C3-C 12 alpha-olefin derived monomer units of at least 60 wt%.

2. The heterophasic polymer composition according to claim 1, wherein the amount of the propylene homo- and/or copolymer within the matrix is at least 80 wt%, more preferably at least 90 wt%, based on the weight of the matrix.

3. The heterophasic polymer composition according to one of the preceding claims, wherein the elastomeric ethylene/C3-C12 alpha-olefin phase is an ethylene/propylene rubber, which may additionally comprise C4-C12 alpha-olefin derived monomer units.

4. The heterophasic polymer composition according to one of the preceding claims, wherein the elastomeric ethylene/C3-C12 alpha-olefin phase has an amount of C3-C 12 alpha-olefin-derived monomer units of at least 60 wt%.

5. The heterophasic polymer composition according to one of the preceding claims, wherein the heterophasic polymer composition has an MFR(230°C, 2.16 kg) within the range of 0.4 g/10 min to 4 g/10 min.

6. The heterophasic polymer composition according to one of the preceding claims, wherein the heterophasic polymer composition has a xylene cold soluble fraction of more than 5 wt%, more preferably at least 10 wt%, even more preferably within the range of 15 to 30 wt%.

7. The heterophasic polymer composition according to one of the preceding claims, wherein the xylene cold soluble fraction of the heterophasic polymer composition has an amount of C3-C12 alpha-olefin-derived monomer units within the range of 65 to 80 wt%.

8. The heterophasic polymer composition according to one of the preceding claims, wherein the xylene cold soluble fraction of the heterophasic polymer composition has an intrinsic viscosity of at least 2.0 dl/g, more preferably at least 2.5 dl/g.

9. The heterophasic polymer composition according to one of the preceding claims, wherein the compound having at least two double bonds is a compound having at least two non-aromatic carbon-carbon double bonds.

10. The heterophasic polymer composition according to claim 9, wherein the compound having at least two double bonds is selected from divinyl compounds, allyl compounds, dienes, aromatic and/or aliphatic bis(maleimide) and bis(citraconimide) compounds, or any mixture of these.

11. The heterophasic polymer composition according to one of the preceding claims, wherein the amount of monomer units derived from the compound having at least two double bonds is within the range of 0.01 wt% to 10 wt%, more preferably 0.05 wt% to 5 wt%, based on the weight of the heterophasic polymer composition.

12. A film, comprising the heterophasic polymer composition as defined in one of the claims 1 to 11.

13. A container, comprising the heterophasic polymer composition as defined in one of the claims 1 to 11 and/or the film as defined in claim 12.

14. The container according to claim 13, which has been subjected to a heat steri lization.

15. A process for the preparation of the heterophasic polymer composition according to one of the claims 1 to 11, comprising the following steps:
(i)providing an unmodified heterophasic polymer composition which comprises
- a matrix comprising a propylene homo- and/or copolymer,
- an elastomeric ethylene/C3-C 12 alpha-olefin phase dispersed in the matrix,
(ii) subjecting the unmodified heterophasic polymer composition of step (i) to a reactive modification step with a compound having at least two double bonds.

16. The process according to claim 15, wherein the compound having at least two double bonds is selected from divinyl compounds, allyl compounds, dienes, aromatic and/or aliphatic bis(maleimide) and bis(citraconimide) compounds, or any mixture of these.

17. The process according to claim 15 or 16, wherein the unmodified heterophasic polymer composition has an MFR(230°C, 2.16 kg) of less than 1.5 g/10 min.

18. The process according to one of the claims 15 to 17, wherein the reactive modification step is carried out in the presence of a radical-forming agent, preferably a peroxide.

19. A heterophasic polymer composition, comprising
- a matrix comprising a propylene homo- and/or copolymer,
- an elastomeric ethylene/C3-C12 alpha-olefin phase dispersed in the matrix,
the heterophasic polymer composition further
- having an MFR(230°C, 2.16 kg) of less than 1.5 g/10 min,
- comprising a compound having at least two double bonds, and
- having a xylene cold soluble fraction which has an amount of C3-C12 alpha-olefin derived monomer units of at least 60 wt%.

20. Use of the heterophasic polymer composition according to one of the claims 1 to 11 for the preparation of sterilizable or sterilized containers such as retort pouches or medical packaging.

## Patentansprüche

1. Eine heterophasische Polymerzusammensetzung umfassend
- eine Matrix umfassend ein Propylen Homo- und/oder Copolymer,
- eine elastomerische Ethylen/C3-C12 alpha-Olefinphase dispergiert in der Matrix, die heterophasische Polymerzusammensetzung weiterhin
- aufweisend ein MFR (230°C, 2,16kg) von weniger als 8 g/10min,
- umfassend Monomereinheiten entstammend von einer Verbindung, die mindestens zwei Doppelbindungen hat, und
- aufweisend eine Xylol kaltlösliche Fraktion, welche eine Menge an C3-C12 alpha-Olefinen entstammenden Monomereinheiten von mindestens 60 Gew.-% hat.

2. Die heterophasische Polymerzusammensetzung nach Anspruch 1, worin die Menge an Propylen Homo- und/oder Copolymer innerhalb der Matrix mindestens 80 Gew.-%, bevorzugter mindestens 90 Gew.-%, basierend auf dem Gewicht der Matrix ist.

3. Die heterophasische Polymerzusammensetzung nach irgendeinem der vorhergehenden Ansprüche, worin die elastomere Ethylen/C3-C12 alpha-Olefinphase ein Ethylen/Propylengummi ist, welcher zusätzlich C4-C12 alpha-Olefin entstammende Monomereinheiten umfassen kann.

4. Die heterophasische Polymerzusammensetzung nach irgendeinem der vorhergehenden Ansprüche, worin die elastomere Ethylen/C3-C 12 alpha-Olefinphase eine Menge an C3-C12 alpha-Olefin entstammenden Monomereinheiten von mindestens 60 Gew.-% enthält.

5. Die heterophasische Polymerzusammensetzung nach irgendeinem der vorhergehenden Ansprüche, worin die heterophasische Polymerzusammensetzung einen MFR (230°C, 2,16kg) im Bereich von 0,4 g/10min bis 4 g/10min hat.

6. Die heterophasische Polymerzusammensetzung nach irgendeinem der vorhergehenden Ansprüche, worin die heterophasische Polymerzusammensetzung eine Xylol kaltlösliche Fraktion von mehr als 5 Gew.-%, bevorzugter von mindestens 10 Gew.-%, noch mehr bevorzugt im Bereich von 15 bis 30 Gew.-%, hat.

7. Die heterophasische Polymerzusammensetzung nach irgendeinem der vorhergehenden Ansprüche, worin die Xylol kaltlösliche Fraktion der heterophasischen Polymerzusammensetzung eine Menge an C3-C12 alpha-Olefin entstammenden Monomereinheiten innerhalb des Bereiches von 65 bis 80 Gew.-% hat.

8. Die heterophasische Polymerzusammensetzung nach irgendeinem der vorhergehenden Ansprüche, worin die Xylol kaltlösliche Fraktion der heterophasischen Polymerzusammensetzung eine intrinsische Viskosität von mindestens 2,0 dl/g, bevorzugter von mindestens 2,5 dl/g, hat.

9. Die heterophasische Polymerzusammensetzung nach irgendeinem der vorhergehenden Ansprüche, worin die Zusammensetzung, die mindestens zwei Doppelbindungen aufweist, eine Verbindung ist, die mindestens zwei nicht aromatische Kohlenstoff-Kohlenstoff Doppelbindungen aufweist.

10. Die heterophasische Polymerzusammensetzung nach Anspruch 9, worin die Verbindung, die mindestens zwei Doppelbindungen aufweist, ausgewählt ist aus der Gruppe bestehend aus Divinyl-Verbindungen, Allyl-Verbindungen, Dienen, aromatische und/oder aliphatische Bis(Maleimid) und Bis(Citraconimid) Verbindungen und jegliche Mischungen dieser.

11. Die heterophasische Polymerzusammensetzung nach irgendeinem der vorhergehenden Ansprüche, worin die Menge an Monomereinheiten entstammend aus der Verbindung, die mindestens zwei Doppelbindungen aufweist, im Bereich von 0,01 Gew.-% bis 10 Gew.-%, bevorzugter 0,05 Gew.-% bis 5 Gew.-%, basierend auf dem Gewicht der heterophasischen Polymerzusammensetzung liegt.

12. Ein Film, umfassend die heterophasische Polymerzusammensetzung wie in irgendeinem der Ansprüche 1 bis 11 definiert.

13. Ein Container umfassend die heterophasische Polymerzusammensetzung wie in irgendeinem der Ansprüche 1 bis 11 und/oder den Film wie in Anspruch 12 definiert.

14. Ein Container nach Anspruch 13, wobei dieser einer Hitzesterilisation ausgesetzt wurde.

15. Verfahren zur Herstellung der heterophasischen Polymerzusammensetzung nach irgendeinem der Ansprüche 1 bis 11 umfassend folgende Schritte:
(i) Bereitstellen einer unmodifizierten heterophasischen Polymerzusammensetzung, welche
- eine Matrix umfassend ein Propylen Homo- und/oder Copolymer,
- eine elastomere Ethylen/C3-C12 alpha-Olefinphase, die in der Matrix dispergiert ist, umfasst
(ii) Unterziehen der unmodifizierten heterophasischen Polymerzusammensetzung aus Schritt (i) einem reaktiven Modifikationsschritt mit einer Verbindung, die mindestens zwei Doppelverbindungen hat.

16. Verfahren nach Anspruch 15, worin die Verbindung, die mindestens zwei Doppelbindungen hat, ausgewählt ist aus der Gruppe bestehend aus Divinylverbindungen, Allylverbindungen, Dienen, aromatisch und/oder aliphatisch Bis(Maleimid)- und Bis(Citraconimid) Verbindungen und jegliche Mischungen dieser.

17. Verfahren nach Anspruch 15 oder 16, worin die unmodifizierte heterophasische Polymerzusammensetzung einen MFR(230°C, 2,16kg) von weniger als 1,5 g/10min hat.

18. Verfahren nach irgendeinem der vorhergehenden Ansprüche 15 bis 17, worin der reaktive Modifikationsschritt in der Gegenwart eines radikalbildenden Agents, vorzugsweise eines Peroxides, ausgeführt wird.

19. Eine heterophasische Polymerzusammensetzung umfassend
- eine Matrix umfassend ein Propylen Homo- und/oder Copolymer,
- eine elastomere Ethylen/C3-C12 alpha-Olefinphase, die in der Matrix dispergiert ist,
die heterophasische Zusammensetzung weiterhin
- aufweisend einen MFR(230°C, 2,16kg) von weniger als 1,5 g/10min,
- umfassend eine Verbindung, die mindestens zwei Doppelbindungen hat und
- aufweisend eine Xylol kaltlösliche Fraktion mit einer Menge an C3-C12 alpha-Olefin entstammenden Monomereinheiten von mindestens 60 Gew.-%.

20. Verwendung der heterophasischen Polymerzusammensetzung nach irgendeinem der Ansprüche 1 bis 11 für die Herstellung von sterilisierbaren oder sterilisierten Containern, wie aufheizbaren Beuteln oder medizinischen Verpackungsmaterial.

## Revendications

1. Composition polymère hétérophasique comprenant
- une matrice comprenant un homo- et/ou un copolymère du propylène,
- une phase éthylène/alpha-oléfine en C3-C12 élastomère, dispersée dans la matrice,
la composition polymère hétérophasique
- ayant en outre un indice de fluidité MFR (230°C, 2,16 kg) inférieur à 8g/10min,
- comprenant en outre des motifs monomères dérivés d'un composé ayant au moins deux doubles liaisons, et
- ayant en outre une fraction soluble dans le xylène à froid qui comprend une quantité de motifs monomères dérivés d'une alpha-oléfine en C3-C 12, d'au moins 60 % en poids.

2. Composition polymère hétérophasique selon la revendication 1, dans laquelle la quantité de l'homo- et/ou du copolymère du propylène à l'intérieur de la matrice est d'au moins 80 % en poids, plus particulièrement d'au moins 90 % en poids par rapport au poids de la matrice.

3. Composition polymère hétérophasique selon l'une des revendications précédentes, dans laquelle la phase éthylène/alpha-oléfine en C3-C12 élastomère est un caoutchouc éthylène/propylène, qui en outre peut comprendre des motifs monomères dérivés d'une alpha-oléfine en C4-C12.

4. Composition polymère hétérophasique selon l'une des revendications précédentes, dans laquelle la phase éthylène/alpha-oléfine en C3-C12 élastomère comprend une quantité de motifs monomères dérivés d'une alpha-oléfine en C3-C12 d'au moins 60 % en poids.

5. Composition polymère hétérophasique selon l'une des revendications précédentes, la composition polymère hétérophasique ayant un indice de fluidité MFR (230°C, 2,16 kg) compris dans la plage de 0,4 à 4 g/10 min.

6. Composition polymère hétérophasique selon l'une des revendications précédentes, la composition polymère hétérophasique ayant une fraction soluble dans le xylène à froid supérieure à 5 % en poids, plus particulièrement d'au moins 10 % en poids, d'une manière encore plus préférée comprise dans la plage de 15 à 30 % en poids.

7. Composition polymère hétérophasique selon l'une des revendications précédentes, dans laquelle la fraction soluble dans le xylène à froid de la composition polymère hétérophasique comprend une quantité de motifs monomères dérivés d'une alpha-oléfine en C3-C12 comprise dans la plage de 65 à 80 % en poids.

8. Composition polymère hétérophasique selon l'une des revendications précédentes, dans laquelle la fraction soluble dans le xylène à froid de la composition polymère hétérophasique a une viscosité intrinsèque d'au moins 2,0 dl/g, plus particulièrement d'au moins 2,5 dl/g.

9. Composition polymère hétérophasique selon l'une des revendications précédentes, dans laquelle le composé ayant au moins deux doubles liaisons est un composé ayant au moins deux doubles liaisons carbone-carbone non aromatiques.

10. Composition polymère hétérophasique selon la revendication 9, dans laquelle le composé ayant au moins deux doubles liaisons est choisi parmi les composés divinyliques, les composés allyliques, les diènes, les bis(maléimides) et les bis(citraconimides) aromatiques et/ou aliphatiques, et tout mélange de ceux-ci.

11. Composition polymère hétérophasique selon l'une des revendications précédentes, dans laquelle la quantité de motifs monomères dérivés du composé ayant au moins deux doubles liaisons est comprise dans la plage de 0,01 à 10 % en poids, plus particulièrement de 0,05 à 5 % en poids, par rapport au poids de la composition polymère hétérophasique.

12. Film comprenant la composition polymère hétérophasique telle que définie dans l'une des revendications 1 à 11.

13. Récipient comprenant la composition polymère hétérophasique telle que définie dans l'une des revendications 1 à 11 et/ou le film tel que défini dans la revendication 12.

14. Récipient selon la revendication 13, qui a été soumis à une stérilisation à la chaleur.

15. Procédé de préparation de la composition polymère hétérophasique selon l'une des revendications 1 à 11, comprenant les étapes suivantes :
(i) mise à disposition d'une composition polymère hétérophasique non modifiée qui comprend
- une matrice comprenant un homo- et/ou un copolymère du propylène,
- une phase éthylène/alpha-oléfine en C3-C12 élastomère dispersée dans la matrice,
(ii) le fait de soumettre la composition polymère hétérophasique non modifiée de l'étape (i) à une étape de modification réactive avec un composé ayant au moins deux doubles liaisons.

16. Procédé selon la revendication 15, dans lequel le composé ayant au moins deux doubles liaisons est choisi parmi les composés divinyliques, les composés allyliques, les diènes, les bis(maléimides) et bis(citraconimides) aromatiques et/ou aliphatiques, ou tout mélange de ceux-ci.

17. Procédé selon la revendication 15 ou 16, dans lequel la composition polymère hétérophasique non modifiée a un indice de fluidité MFR (230°C, 2,16 kg) inférieur à 1,5 g/10 min.

18. Procédé selon l'une des revendications 15 à 17, dans lequel l'étape de modification réactive est mise en oeuvre en présence d'un agent radicalaire, de préférence un peroxyde.

19. Composition polymère hétérophasique comprenant
- une matrice comprenant un homo- et/ou un copolymère du propylène,
- une phase éthylène/alpha-oléfine en C3-C12 élastomère dispersée dans la matrice,
la composition polymère hétérophasique
- ayant en outre un indice de fluidité MFR (230°C, 2,16 kg) inférieur à 1,5 g/10 min,
- comprenant en outre un composé ayant au moins deux doubles liaisons et
- ayant une fraction soluble dans le xylène à froid qui comprend une quantité de motifs monomères dérivés d'une alpha-oléfine en C3-C12 d'au moins 60 % en poids.

20. Utilisation de la composition polymère hétérophasique selon l'une des revendications 1 à 11 pour la préparation de récipients stérilisables ou stérilisés, tels que des conserves souples ou des conditionnements à usage médical.
